(19)

Europäisches
Patentamt
European
Patent Office
Office européen
des brevets

(11) **EP 4 283 327 A1**

(12) **EUROPEAN PATENT APPLICATION**

(43) Date of publication:
**29.11.2023  Bulletin 2023/48**

(21) Application number: **23164982.3**

(22) Date of filing: **29.03.2023**

(51) International Patent Classification (IPC):
**G01S 7/03** $^{(2006.01)}$    **G01S 7/35** $^{(2006.01)}$
**G01S 13/44** $^{(2006.01)}$    **G01S 13/58** $^{(2006.01)}$
**G01S 13/72** $^{(2006.01)}$    **G01S 13/931** $^{(2020.01)}$

(52) Cooperative Patent Classification (CPC):
**G01S 13/584; G01S 7/03; G01S 7/354;**
**G01S 7/356; G01S 13/4454; G01S 13/726;**
G01S 13/931

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.05.2022  US 202263365219 P**
**27.05.2022  US 202263365478 P**
**02.09.2022  US 202217929602**

(71) Applicant: **Aptiv Technologies Limited**
**St. Michael (BB)**

(72) Inventors:
• **Cai, Xiuzhang**
**Carmel, IN, 46074 (US)**
• **Liu, Baokun**
**Kokomo, IN, 46902 (US)**

(74) Representative: **Manitz Finsterwald**
**Patent- und Rechtsanwaltspartnerschaft mbB**
**Martin-Greif-Strasse 1**
**80336 München (DE)**

(54) **SUPER-RESOLUTION BASED ON ITERATIVE MULTIPLE-SOURCE ANGLE-OF-ARRIVAL ESTIMATION**

(57)    This document describes techniques and systems for super-resolution based on iterative multiple-source angle-of-arrival estimation. Beam vectors received by an electromagnetic sensor may include information about multiple objects, but if the objects are close, the objects may initially appear as a single object in a Doppler-range bin. Performing iterative operations on a first angle derived from the beam vector and a subsequent second angle, associated with a second object, derived from the first angle, the first angle and the second angle may be refined and converge toward their actual respective values. The iterative operations include performing calculations involving only the first angle value and the second angle value as unknowns. Noise has been approximated to be random Gaussian noise with zero mean. Additionally, phase ambiguity, associated with sparse channel arrays has been eliminated. The calculations may require less computational complexity and maintain accuracy resulting in safer and reliable tracking systems.

EP 4 283 327 A1

**Description**

**BACKGROUND**

Advanced safety or driving systems for vehicles may use electromagnetic sensors (e.g., radar) to track nearby objects. These objects may include other vehicles, pedestrians, and animals, as well as inanimate objects, such as trees and street signs. The sensors collect data, including information in different dimensions (e.g., range, Doppler, azimuth angle, elevation angle) that can be processed to estimate positions, trajectories, and movements of the objects.

In radar systems, the angular resolution derived from the radar data can be limited. This limitation may impede the radar system from accurately detecting multiple objects when they are near one another. For example, the radar detections may initially identify two objects inaccurately as one object. There are several current methods for increasing angular resolution in a radar system. However, particularly in automotive applications, faster methods that maintain accuracy are desired.

SUMMARY

This document describes techniques and systems for super-resolution based on iterative multiple-source angle-of-arrival estimation. Beam vectors received by an electromagnetic sensor may include information about multiple objects, but if the objects are close, the objects may initially appear as a single object in a Doppler-range bin. Performing iterative operations on a first angle derived from the beam vector and a subsequent second angle, associated with a second object, derived from the first angle, the first angle and the second angle may be refined and converge toward their actual respective values. The iterative operations include performing calculations involving only the first angle value and the second angle value as unknowns. Noise has been approximated to be random Gaussian noise with zero mean. Additionally, phase ambiguity, associated with sparse channel arrays has been eliminated. The calculations may require less computational complexity and maintain accuracy resulting in safer and reliable tracking systems.

In one example, a method includes determining, based on an electromagnetic signal received by an electromagnetic sensor, an initial first angle estimate associated with a location of a first object relative to the electromagnetic sensor. The method further includes determining, for an initial iteration and based on the initial first angle estimate, an initial second angle estimate associated with a location of a second object relative to the electromagnetic sensor. The method further includes determining, for the initial iteration and based on the initial second angle estimate, an updated first angle estimate. The method further includes determining, for a subsequent iteration and based on the updated first angle estimate, an updated second angle estimate. The method further includes determining, for the subsequent iteration and based on the updated second angle estimate, the updated first angle estimate. The method further includes in response to determining an iterative-loop condition is satisfied, outputting, to an object tracking system, the updated first angle estimate and the updated second angle estimate for tracking the first object and the second object, respectively.

These and other described techniques may be performed by hardware or a combination of hardware and software executing thereon. For example, a computer-readable storage media (CRM) may have instructions stored thereon and that when executed configure a processor to perform the described techniques. A system may include means for performing the described techniques. A processor or processor unit may be part of a system that is configured to execute the methods and techniques described herein.

This Summary introduces simplified concepts related to super-resolution based on iterative multiple-source angle-of-arrival estimation, further described in the Detailed Description and Drawings. This Summary is not intended to identify essential features of the claimed subject matter, nor is it intended for use in determining the scope of the claimed subject matter. Although primarily described in the context of automotive radar systems, the techniques for super-resolution based on iterative multiple-source angle-of-arrival estimation can be applied to other applications where accuracy and computational efficiency of processing electromagnetic signals are desired. Further, these techniques may also be applied to other electromagnetic sensors detecting angle-of arrival of objects.

BRIEF DESCRIPTION OF THE DRAWINGS

The details of super-resolution based on iterative multiple-source angle-of-arrival estimation is described in this document with reference to the Drawings that may use same numbers to reference like features and components, and hyphenated numbers to designate variations of these like features and components. The Drawings are organized as follows:

FIG. 1 illustrates an example environment in which super-resolution based on iterative multiple-source angle-of-arrival estimation can be applied, in accordance with techniques of this disclosure;
FIG. 2 illustrates an example vehicle including a system configured for super-resolution based on iterative multiple-source angle-of-arrival estimation, in accordance with techniques of this disclosure;

FIGs. 3-1 through 3-3 illustrate an example radar system utilizing an antenna array and configured for super-resolution based on iterative multiple-source angle-of-arrival estimation, in accordance with techniques of this disclosure;

FIG. 4 illustrates an example flowchart of an iterative process for super-resolution based on iterative multiple-source angle-of-arrival estimation, in accordance with techniques of this disclosure; and

FIG. 5 illustrates an example method for super-resolution based on iterative multiple-source angle-of-arrival estimation, in accordance with techniques of this disclosure.

DETAILED DESCRIPTION

OVERVIEW

Angle-of-arrival (AOA) (e.g., azimuth angle) of targets is one of the dimensions that can be derived from radar data. Vehicles that use radar systems to detect and track objects (e.g., targets) in a driving environment need accurate AOA information for those objects to safely navigate the environment. Objects that are close to one another may sometimes appear as a single object if the AOA of each object is close to one another. This presents a challenge for radar system designers to improve the accuracy of determining the AOA of each object.

Finding the AOA of targets is an important task for automotive radar signal processing. Traditionally, multiple-input multiple-output (MIMO) radar systems and sensors have often utilized fast Fourier transforms (FFT) and/or phase comparison for single target finding problems. However, if two close targets are in the same range-Doppler bin, neither FFT nor phase comparison methods yield results that have the accuracy needed for automotive applications. A super-resolution method is required for these and other applications where greater accuracy leads to improved safety.

Many super-resolution methods have been tried to increase accuracy of determining the AOA related to objects. These methods generally can be divided into two categories: subspace methods and optimization methods. The subspace methods calculate a covariance matrix of beam vectors of multiple snapshots (e.g., independent samples) and utilize special features of the covariance matrix to estimate the angles. The subspace methods usually require an input of the number of sources (e.g., objects or targets) and may need to scan over multiple angles, which can be computationally inefficient.

Some optimization methods may consider the angle-finding problem as a nonlinear optimization problem, define optimization goals (e.g., minimize beam vector errors), and search for angles with optimal performance. These methods can be time consuming to compute. Other optimization methods are based on uniform linear arrays (ULA) and reveal analytic relations between the angles of sources and the beam vectors of the ULAs. Often iterative functions are used to converge the angles to an estimated value.

In contrast, the techniques described herein relate to an iterative optimization method that is not limited to ULAs but can be applied to radar systems utilizing non-uniform linear arrays (non-ULA). The accuracy of these techniques may be comparable or superior to the traditional methods. Additionally, these techniques may be much more computationally efficient than some of the traditional methods. The improved accuracy and efficiency of these techniques may lead to a safer driving experience.

EXAMPLE ENVIRONMENT

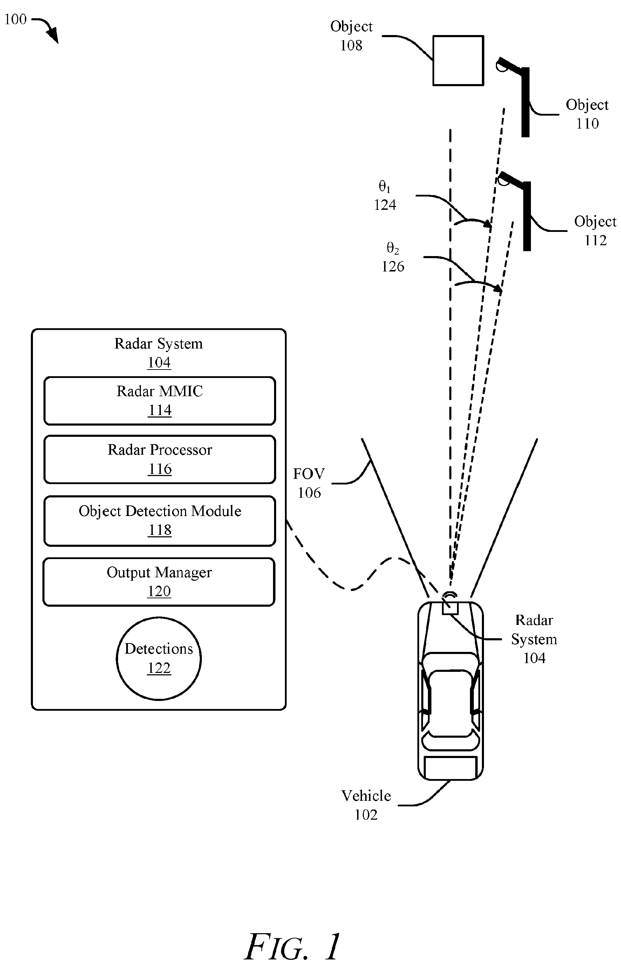

FIG. 1 illustrates an example environment 100 in which super-resolution based on iterative multiple-source angle-of-arrival estimation can be applied, in accordance with techniques of this disclosure. In the depicted environment 100, a vehicle 102 travels on a roadway by at least partially relying on output from a radar system 104. Although illustrated as a passenger car, the vehicle 102 can represent other types of motorized vehicles (e.g., truck, motorcycle, bus, tractor, semi-trailer truck), non-motorized vehicles (e.g., a bicycle), railed vehicles (e.g., a train), watercraft (e.g., a boat), aircraft (e.g., an airplane), spacecraft (e.g., satellite), and the like.

The radar system 104 can be installed on, mounted to, or integrated with any moving platform, including moving machinery or robotic equipment. Components of the radar system 104 can be arranged in a front, back, top, bottom, or side portion of the vehicle 102, within a bumper, integrated into a side mirror, formed as part of a headlight and/or taillight, or at any other interior or exterior location where objects require detection. The vehicle 102 may include multiple radar systems 104, such as a first radar system and a second radar system, to provide a custom field-of-view 106 that encompasses a particular region of interest outside the vehicle 102. Acting as part of a perception system of the vehicle 102, the radar system 104 aids in driving the vehicle 102 by enabling advanced safety or autonomous driving features. Vehicle subsystems may rely on the radar system 104 to detect whether any objects (e.g., objects 108, 110, and 112) appear in the environment 100 within a particular field of view (FOV) 106.

The radar system 104 is configured to detect the objects 108, 110, and 112 by radiating the objects 108, 110, and 112 within the field of view 106. For example, the object 108 can be a stationary or moving object and includes one or more materials that reflect radar signals. The objects 110 and 112 may be another vehicle, a traffic sign, a barrier, an animal, a pedestrian, or any other object or debris. In the depicted environment 100, radar signals reflected off the object 110 has an AOA 124 with respect to the radar system 104. Similarly, radar signals reflected off the object 112 has an AOA 126 with respect to the radar system 104. In some cases, the object 110 and the object 112 may be relatively near to one another, or they may appear near to one another relative to their AOA. In these cases, the AOA 124 and the AOA 126 may have values that are close to one another, and the radar detections of objects 110 and 112 may initially appear in the same Doppler-range bin as a single detection.

The radar system 104 can include a combination of hardware components and software components executing thereon. For example, a non-transitory computer-readable storage media (CRM) of the radar system 104 may store machine-executable instructions that, when executed by a processor of the radar system 104, cause the radar system 104 to output information about objects detected in the field of view 106. As one example, the radar system 104 includes a signal processing component that may include a radar monolithic microwave integrated circuit (MNΠC) 114 and a radar processor 116. The radar MMIC 114 and the radar processor 116 may be physically separated components, or their functionality may be included within a single integrated circuit. Other processors may, likewise, be present in some aspects. In this example, the radar system 104 also includes an object detection module 118 and an output manager 120. In some aspects, the object detection module 118 can be stored on a CRM of another system. In other examples, the operations associated with the radar system 104 can be performed using a different arrangement or quantity of components than that shown in FIG. 1. These components receive radar signals to generate detections 222. The detections 226 can be used to update object tracks and classify objects.

In cases where the object 110 and the object 112 appear in the same Doppler-range bin, the object detection module 118 can utilize an iterative process to generate accurate detections 222 of the object 110 and the object 112. The iterative process receives an initial first angle estimate (e.g., the AOA 124) and, using the beam vector and the channel (e.g., antenna element) spacing, estimate an initial second angle (e.g., the AOA 126). The initial second angle estimate can then be used to update the first angle estimate. Additionally, for non-ULAs, the beam vector can be normalized during the iterative process to reduce or eliminate phase ambiguity. This iterative process continues until either both angles converge to their respective values, or a set number of iterations have been performed. This iterative process may be computationally efficient and reasonably accurate.

EXAMPLE SYSTEMS

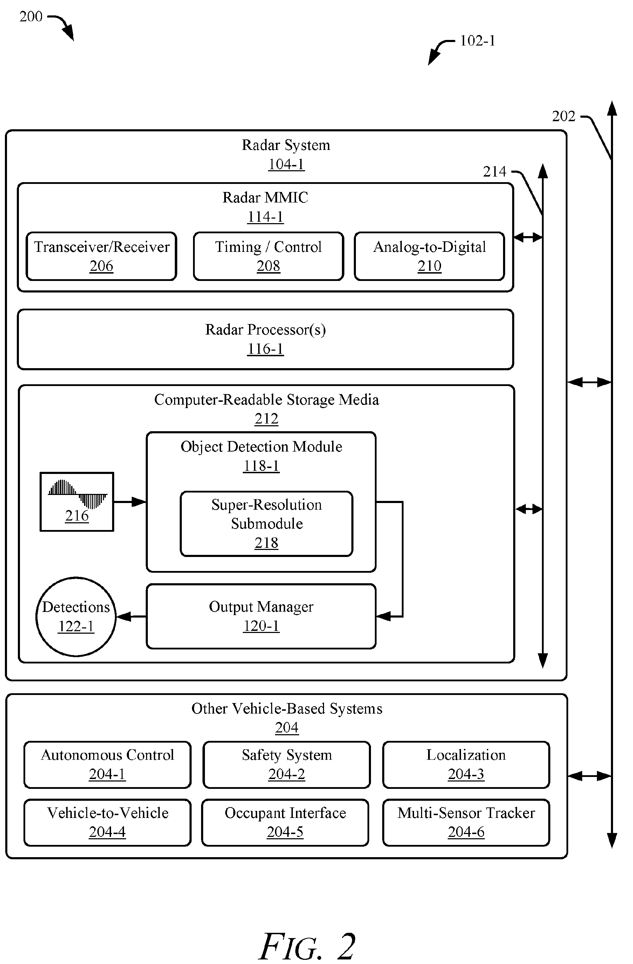

FIG. 2 illustrates an example vehicle 102-1 including a system configured for super-resolution based on iterative multiple-source angle-of-arrival estimation, in accordance with techniques of this disclosure. The vehicle 102-1 is an example of the vehicle 102. Included in the vehicle 102-1 is a radar system 104-1, which is an example of the radar system 104. The vehicle 102-1 further includes a communication link 202 that the radar system 104-1 can use to communicate to other vehicle-based systems 204. The communication link 202 may be a wired or wireless link and, in some cases, includes a communication bus (e.g., CAN bus). The other vehicle-based systems 204 perform operations based on information received from the radar system 104-1, over the link 202, such as data output from the radar system 104-1, including information indicative of one or more objects identified and tracked in the FOV.

The radar system 104-1 includes a radar MMIC 114-1 and a radar processor 1216-1, similar to the radar system 104. The radar MMIC 114-1 includes one or more transceivers/receivers 206, timing/control circuitry 208 and analog-to-digital converters (ADC) 210.

The radar system 104-1 further includes a non-transitory computer-readable storage media (CRM) 212 (e.g., a memory, long-term storage, short-term storage), which stores instructions for the radar system 104-1. The CRM 212 stores an object detection module 118-1, including a super-resolution submodule 218, and an output manager 120-1. Other instructions, relevant to the operation of the radar system 104-1 may, likewise, be stored in the CRM 212. The components of the radar system 104-1 communicate via a link 214. For example, the objection detection module 118-1 receives low-level radar data 216 from the MMIC 114-1 over the link 214. The object detection module 118-1 processes the low-level radar data 216 via the super-resolution submodule 218 and other submodules (not shown) to generate the detections 122-1.

The super-resolution module 218 utilizes an iterative process to increase the angular resolution of the object detection module 118-1. For example, for two objects that are in the same Doppler-range bin, the super-resolution module 218 may separate an initial angle estimate associated with the respective Doppler-range bin into two separate angles that are associated with the two objects. The iterative process eliminates a noise variable by approximating noise to random Gaussian noise with a zero mean. The iterative process also reduces or eliminates phase ambiguity caused by array spacing of antenna channels being greater than a half-wavelength of the operable frequency. The result is that one angle can be expressed as an expected value of a function of the other angle. The values of each angle can then be resolved iteratively. The iterative process may be very inexpensive computationally while maintaining accuracy.

The radar processor 116-1 also receives instructions from the CRM 212 to execute the output manager 120-1 over the link 214. The output manager 120-1 distributes the angular information related to the objects to other modules stored in the CRM 212 that perform other radar tasks, including radar detection and tracking functions and generation of the detections 122-1. The detections 122-1 are made available by the output manager 120-1 to the other vehicle-based systems 204.

The other vehicle-based systems 204 can include autonomous control system 204-1, safety system 204-2, localization system 204-3, vehicle-to-vehicle system 204-4, occupant interface system 204-5, multi-sensor tracker 204-6, and other systems not illustrated. Objects in the FOV can be inferred and classified based on the detections 122-1, and this information can be output to the other vehicle-based systems 204. In this manner, the other vehicle-based systems 204 can receive an indication of one or more objects detected by the radar system 104-1 in response to the radar system 104-1 combining and analyzing the radar data 216 generated by the received signals. The other vehicle-based systems 204 may perform a driving function or other operation that may include using output from the radar system 104-1 to assist in determining driving decisions. For example, the autonomous control system 204-1 can provide automatic cruise control and monitor the radar system 204-1 for output that indicates the presence of objects in the FOV, for instance, to slow the speed and prevent a collision with an object in the path of the vehicle 102-1. The safety system 204-2 or the occupant interface system 204-5 may provide alerts or perform a specific maneuver when the data obtained from the radar system 104-1 indicates that one or more objects are crossing in front of the vehicle 102-1. Because the super-resolution submodule 218 may provide object angle information more quickly than traditional methods, the vehicle-based systems 204 may access the detections 122-1 faster resulting in a safer and more reliable driving experience.

EXAMPLE IMPLEMENTATIONS

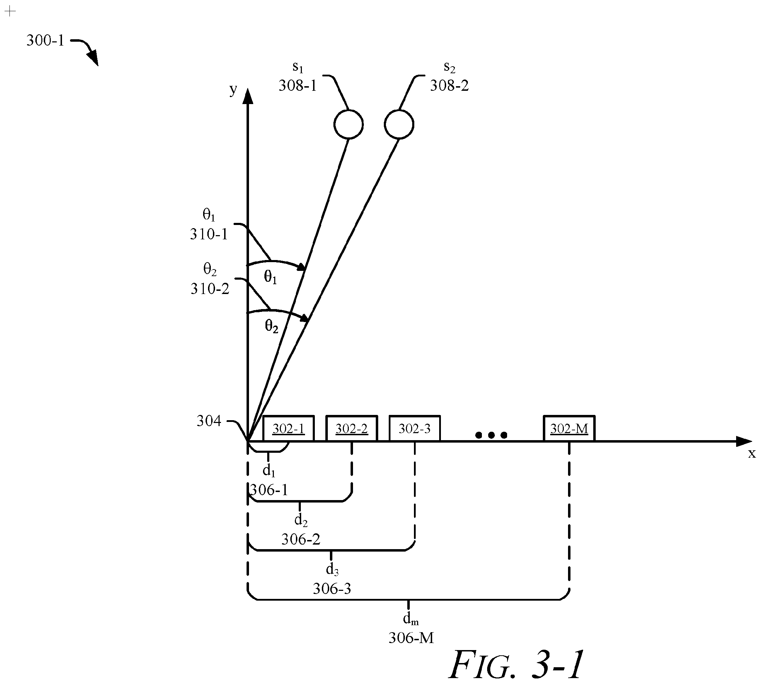

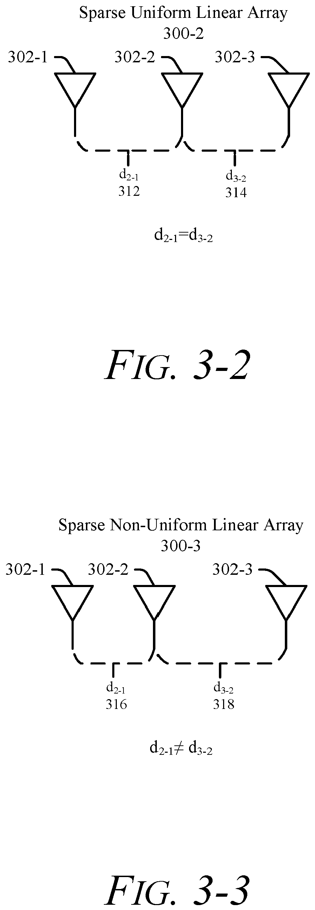

FIGs. 3-1 through 3-3 illustrate an example radar system (e.g., the radar system 104, 104-1) utilizing an antenna array 300-1 and configured for super-resolution based on iterative multiple-source angle-of-arrival estimation, in accordance with techniques of this disclosure. FIG. 3-1 illustrates an example of an antenna array 300-1 that has an M number of receive channels 302. Each receive channel is arranged a certain distance from an origin 304. For example, receive channel 302-1 is a distance di 306-1 from the origin 304, receive channel 302-2 is a distance $d_2$ 306-2 from the origin 304, receive channel 302-3 is a distance $d_3$ 306-3 from the origin 304, and receive channel 302-M is a distance $d_m$ 306-M from the origin 304. The antenna array 300-1 can be a sparse ULA 300-2 as illustrated in FIG. 3-2 where the distance between each receive channel 302 is separated by the same distance (e.g., the distance $d_{2\text{-}1}$ 312 is equal to the distance $d_{3\text{-}2}$ 314 is equal to a distance $d_{m\text{-}(m\text{-}1)}$). The antenna array can, likewise, be a sparse non-ULA 300-3 as illustrated in FIG. 3-3. In the sparse non-ULA 300-3, the distance between at least two pairs of receive channels 302 (e.g., the distance $d_{2\text{-}1}$ 316 and the distance $d_{3\text{-}2}$ 318) are not equal. In other aspects, the antenna array may be dense, or a combination of sparse and dense channels that can be either uniform or non-uniform.

The antenna array receives radar signals scattered by a source si 308-1 and a source $s_2$ 308-2 from angles $\theta_1$ 310-1 and $\theta_2$ 310-2, respectively. In this example, the values of the angles $\theta_1$ 310-1 and $\theta_2$ 310-2 are relatively close to one another such that the scattered signals of the source si 308-1 and the source $s_2$ 308-2 are in the same Doppler-range bin after an FFT is applied to the signals.

Finding the angles of the source si 308-1 and the source $s_2$ 308-2 can be accomplished by the methods described herein which are based on the classical signal model (eq 1):

$$\vec{x} = A(\theta)\vec{s} + \vec{n} \qquad\qquad (\text{eq. 1})$$

Where $\vec{x}$ is the beam vector after calibration, $A(\theta)$ denotes the steering matrix, and $\vec{s}$ denotes the signal strengths of sources, in the radar application, $\vec{s}$ is related to the radar cross section (RCS) of the sources si 308-1 and the $s_2$ 308-2. If there are M channels and N sources, then the matrix form of (eq. 1) is:

$$\begin{pmatrix} x_1 \\ x_2 \\ \text{...} \\ x_M \end{pmatrix} = \begin{pmatrix} e^{ik_0 d_1 \sin\theta_1} & \cdots & e^{ik_0 d_1 \sin\theta_N} \\ \vdots & \ddots & \vdots \\ e^{ik_0 d_M \sin\theta_1} & \cdots & e^{ik_0 d_M \sin\theta_N} \end{pmatrix} \begin{pmatrix} s_1 \\ s_2 \\ \text{...} \\ s_N \end{pmatrix} + \begin{pmatrix} n_1 \\ n_2 \\ \text{...} \\ n_M \end{pmatrix} \qquad (\text{eq. 2})$$

where the known quantities are the beam vector $\vec{x}$, and the channel spacing di 306-1, $d_2$ 306-2, $d_3$ 306-3, and $d_m$ 306-M. The angles $\{\theta_n\}$, signal strength $\{s_n\}$ and the noises $\{n_m\}$ are unknowns.

In the two sources case, let $\sin \theta_n$ be $T_n$, $T_1$ and $T_2$ can be related by eq. 3:

$$\frac{e^{ik_0(d_m-d_{m-1})(T_2-T_1)} - 1}{1 - e^{ik_0(d_{m-2}-d_{m-1})(T_2-T_1)}} = \frac{e^{-ik_0(d_m-d_{m-1})T_1}x_m - x_{m-1} - n_m^{(m-1)}}{x_{m-1} - e^{ik_0(d_{m-1}-d_{m-2})T_1}x_{m-2} - n_{m-1}^{(m-2)}} \qquad (\text{eq. 3})$$

where $d_m$ denotes the azimuth position of channel $m$, $x_m$ denotes the calibrated beam vector at channel $m$,

$n_m^{(m-1)} = e^{-ik_0(d_m-d_{m-1})T_1}n_m - n_{m-1}$ , which is the combination of noise terms $n_m$ and $n_{m-1}$. If the noise term

$\{n_m\}$ is random Gaussian noise $n_m \sim N(0, \sigma^2)$, then $n_m^{(m-1)}$ is also random Gaussian noise with a zero mean and a

variance of $\sigma^2$, ( $n_m^{(m-1)} \sim N(0, 2\sigma^2)$ ). If $d_m$ - $d_{m-1}$ = $d_{m-1}$ - $d_{m-2}$ = $d$, then the left side of eq. 3 can be reduced to $e^{ik_0 d(T_2-T_1)}$ and

$$e^{ik_0 d(T_2-T_1)} = \frac{e^{-ik_0(d_m-d_{m-1})T_1}x_m - x_{m-1} - n_m^{(m-1)}}{x_{m-1} - e^{ik_0(d_{m-1}-d_{m-2})T_1}x_{m-2} - n_{m-1}^{(m-2)}} \qquad (\text{eq. 4})$$

If the logarithm function is applied to both sides (eq. 5)

$$i[k_0 d(T_2 - T_1) \pm 2k\pi] = \log \frac{e^{-ik_0 dT_1}x_m - x_{m-1} - n_m^{(m-1)}}{x_{m-1} - e^{ik_0 dT_1}x_{m-2} - n_{m-1}^{(m-2)}} \qquad (\text{eq. 5})$$

the noise term can be separated (eq. 6):

$$i[k_0 d(T_2 - T_1) \pm 2k\pi]$$
$$= \log \frac{e^{-ik_0 dT_1}x_m - x_{m-1}}{x_{m-1} - e^{ik_0 dT_1}x_{m-2}} + \log \frac{1 - \dfrac{n_m^{(m-1)}}{e^{-ik_0 dT_1}x_m - x_{m-1}}}{1 - \dfrac{n_{m-1}^{(m-2)}}{x_{m-1} - e^{ik_0 dT_1}x_{m-2}}} \qquad (\text{eq. 6})$$

Considering high signal-to-noise ratio (SNR) cases where $\sigma^2 \ll 1$, the Taylor series can be applied to the noise term (eq. 7):

$$\log \frac{1 - \dfrac{n_m^{(m-1)}}{e^{-ik_0 dT_1}x_m - x_{m-1}}}{1 - \dfrac{n_{m-1}^{(m-2)}}{x_{m-1} - e^{ik_0 dT_1}x_{m-2}}} \approx \frac{n_m^{(m-1)}}{e^{-ik_0 dT_1}x_m - x_{m-1}} - \frac{n_{m-1}^{(m-2)}}{x_{m-1} - e^{ik_0 dT_1}x_{m-2}} \qquad (\text{eq. 7})$$

This noise term is also a zero mean Gaussian random variable with a variance of $\dfrac{2\sigma^2}{e^{-ik_0 dT_1}x'_m - x'_{m-1}} + \dfrac{2\sigma^2}{x'_{m-1} - e^{ik_0 dT_1}x'_{m-2}}$. Therefore, one angle can be explicitly expressed as an expectation of a function of another angle (e.g., the angles $\theta_1$ 310-1 and $\theta_2$ 310-2) (eq. 8)

$$T_2 \approx f(T_1) = \frac{E\left[arg\, \dfrac{e^{-ik_0 dT_1} x_m - x_{m-1}}{x_{m-1} - e^{ik_0 dT_1} x_{m-2}}\right] \pm 2k\pi}{k_0 d} + T_1, k \in \mathbb{Z} \qquad \text{(eq. 8)}$$

$2k\pi$ relates to the phase ambiguity caused by a sparse array space. If the array space is equal or less than $\lambda/2$, there will be no phase ambiguity (e.g., $k = 0$). Additionally, eq. 8 gives the relation between only the two unknown angles $\theta_1$ 310-1 and $\theta_2$ 310-2 and is reciprocal (e.g., $T_1 \approx f(T_2)$).

In contrast, some traditional methods utilize linear regression to calculate the angles of close sources. For example, for A sources, the angle of the $N^{th}$ source $\theta_N$ is estimated from the angle of all other sources ($\theta_1, \dots \theta_{N-1}$). If $T_n = \sin \theta_n$, the following relation can be obtained (eq. 9):

$$\Gamma_{m,N-1}^{(1)} = e^{ik_0 d(T_N - T_{N-1})} \Gamma_{m-1,N-1}^{(1)} + n_{m-1}^{(1)\prime}, \qquad N+1 \leq m \leq M \qquad \text{(eq. 9)}$$

where $\Gamma_{m,N-1}^{(1)}$ are functions of the beam vector $\vec{x}$ and angles $\theta_1, \dots \theta_{N-1}$. $n_{m-1}^{(1)\prime}$ is a Gaussian random noise. $\Gamma_{m,n}^{(l)}$ can be recursively calculated and is given by (eq. 10):

$$\Gamma_{m,n}^{(l)} = \frac{\Gamma_{m,n-1}^{(l)}}{\Gamma_{m,n-1}^{(n)}} - \frac{\Gamma_{m-1,n-1}^{(l)}}{\Gamma_{m-1,n-1}^{(n)}}, \qquad \text{(eq. 10)}$$

with initial conditions (eq. 11 and eq. 12):

$$\Gamma_{m,1}^{(1)} = e^{-ik_0 d m T_1} x_m - e^{-ik_0 d(m-1)T_1} x_{m-1}, \qquad \text{(eq. 11)}$$

$$\Gamma_{m,1}^{(n)} = e^{ik_0 d m (T_n - T_1)} - e^{ik_0 d(m-1)(T_n - T_1)} \qquad \text{(eq. 12)}$$

In this case, $e^{ik_0 d(T_N - T_{N-1})}$ in eq. 9 is calculated by linear regression (eq. 13):

$$e^{ik_0 d(T_N - T_{N-1})} = \left[\left(\Gamma_{m-1,N-1}^{(1)}\right)^T \Gamma_{m-1,N-1}^{(1)}\right]^{-1} \left(\Gamma_{m-1,N-1}^{(1)}\right)^T \Gamma_{m,N-1}^{(1)}, \qquad \text{(eq. 13)}$$

For the two-source problem (N=2) as described previously, eq. 9 can be reduced to (eq. 14):

$$e^{-ik_0 d m T_1} x_m - e^{-ik_0 d(m-1)T_1} x_{m-1}$$
$$= e^{ik_0 d(T_2 - T_1)}\left(e^{-ik_0 d m T_1} x_{m-1} - e^{-ik_0 d(m-1)T_1} x_{m-2}\right) + n_{m-1}^{(1)\prime}, \qquad \text{(eq. 14)}$$
$$3 \leq m \leq M$$

Eq. 14 is equivalent to eq. 4 by substituting $n_{m-1}^{(1)\prime}$ with $n_m^{(m-1)} - e^{ik_0 d(T_2 - T_1)} n_{m-1}^{(m-2)}$ However, due to the approximation performed in eq. 7, eq. 4 can be rearranged as eq. 8. Eq 8. may be preferable to eq. 13 for applications requiring computational efficiency, because eq. 8 does not require matrix inversion and multiplication as does eq. 13. Additionally, the traditional methods as described in this example are applicable only to a ULA with $\lambda/2$ spacing, whereas the techniques in this disclosure can be applied to sparse ULAs and non-ULAs.

As an example, take a case involving phase ambiguity. A no phase ambiguity k = 0 will be $|sin\theta_1 - sin\theta_2| < 0.25$, or $|\theta_1 - \theta_2| < 14.5°$ in the boresight of the system, meaning when the angular difference is less than 14.5° in the boresight. For angular difference greater than 14.5°, a subarray with different channel spacing is needed. For a radar system with several ULA subarrays with $l_1$ spacing $l_1 > 0.5\lambda$, eq. 8 becomes eq. 15:

$$T_2 = \frac{E\left[arg\dfrac{e^{-ik_0 l_1 T_1}x_m - x_{m-1}}{x_{m-1} - e^{ik_0 l_1 T_1}x_{m-2}}\right]}{k_0 l_1} + \frac{2k\pi}{k_0 l_1} + T_1, k \in \mathbb{Z} \qquad \text{(eq. 15)}$$

Since the angles are within $\pm 90°$, the range of $T_2$ is $-1 < T_2 < 1$. If $\dfrac{E\left[arg\dfrac{e^{-ik_0 l_1 T_1}x_m - x_{m-1}}{x_{m-1} - e^{ik_0 l_1 T_1}x_{m-2}}\right]}{k_0 l_1} + T_1 = A$ , then the phase ambiguity number is bounded by (eq. 16):

$$-\frac{k_0 l_1}{2\pi}(1 + A) < k < \frac{k_0 l_1}{2\pi}(1 - A), k \in \mathbb{Z} \qquad \text{(eq. 16)}$$

There could be maximum *ceil* $\left(\dfrac{k_0 l_1}{\pi}\right)$ possible kvalues. Having another channel with $l_2$ space away from an existing channel can form a linear three element subarray such that $d_2 - d_1 = l_2$ and $d_3 - d_2 = l_1$. By letting

$$l_1 = n_1 l_0, \qquad l_2 = n_2 l_0, \qquad n_1, n_2 \in \mathbb{N} \qquad \text{(eq. 17)}$$

and denoting $n_0$ as the greatest common divisor of $n_1$ and $n_2$, $n_0 = \gcd(n_1, n_2)$, and if $n_0 l_0 \leq 0.5\lambda$, the integer k of the phase ambiguity can be determined by the following steps. All possible ambiguity integers $k$ can be substituted into eq. 15 and ($T_2 - T_1$) for different $k$ values. These ($T_2 - T_1$) values can be substituted into the left side of eq. 3, and the $k$ value that minimizes the difference between both sides of eq. 3 can be chosen (eq. 18):

$$k = \arg\min_k \left| \frac{e^{ik_0 l_1(T_2 - T_1)} - 1}{1 - e^{-ik_0 l_2(T_2 - T_1)}} - \frac{e^{-ik_0 l_1 T_1}x_3 - x_2}{x_2 - e^{ik_0 l_2 T_1}x_1} \right| \qquad \text{(eq. 18)}$$

The results of testing the described techniques against the traditional methods have shown significant improvements in a test environment. The computational efficiency (e.g., computational speed) may be up to ten times faster than more conventional methods. Additionally, the root mean squared error (RMSE) of the described techniques may be improved over some of conventional methods in low SNR cases and similar in higher SNR cases.

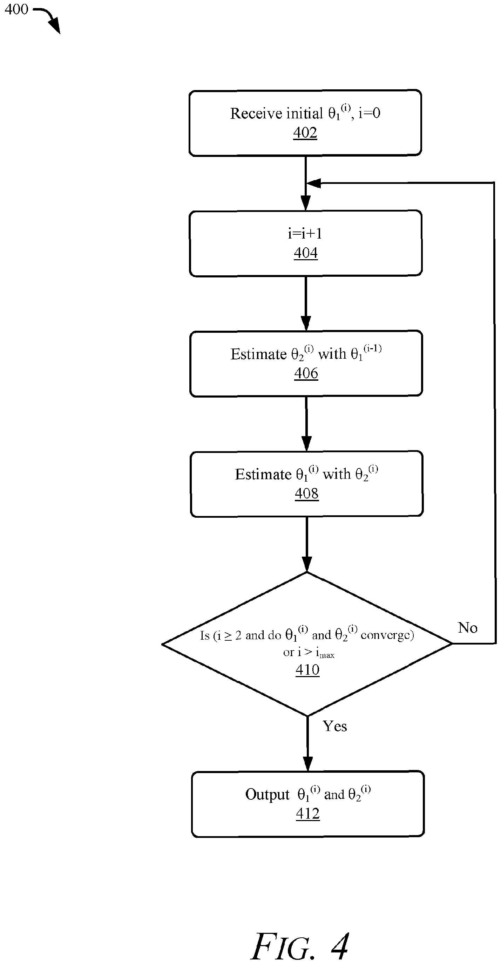

FIG. 4 illustrates an example flowchart 400 of an iterative process for super-resolution based on iterative multiple-source angle-of-arrival estimation, in accordance with techniques of this disclosure. At step 402, an initial angle, $\theta_1^{(i=0)}$ , is received by a super-resolution module (e.g., the super-resolution submodule 218). The initial angle may be determined by the peak of an FFT performed on a received beam vector which may yield an angle close to that of the strongest source when information related to multiple sources is associated with the beam vector. In particular, the associated FFT may have the appearance of a single peak within a Doppler-range bin during initial processing when two sources are in close proximity to one another. Step 402 occurs before an iterative loop begins (e.g., the iteration count, i, is zero).

Steps 404 through 410 are the iterative process. In some aspects, other steps not shown may be included in this iterative process. At step 404, the iteration count is incremented by 1. At step 406, an angle, $\theta_2^{(i)}$ , is estimated from $\theta_1^{(i-1)}$ . During the first iteration, $i=0$, $\theta_2^{(i)}$ is estimated from the initial angle estimate $\theta_1^{(i=0)}$ . At step 408, an angle $\theta_1^{(i)}$ is estimated based on the estimation of $\theta_2^{(i)}$ . The estimations of $\theta_2^{(i)}$ are based on substituting $\theta_1^{(i-1)}$

into either eq. 8 or eq. 15 depending on the system and solving for $\theta_2^{(i)}$. Likewise, the estimations of $\theta_1^{(i)}$ are based on substituting $\theta_2^{(i)}$ into either eq. 8 or eq. 15 and solving for $\theta_1^{(i)}$. At step 410, a decision is made whether to continue the iterative loop or output the results. In some aspects, the decision to break the iterative loop and output the results is based on whether a minimum number of iterations have been performed (e.g., $i \geq 2$), or if the angles $\theta_1^{(i)}$ and $\theta_2^{(i)}$ have converged to their respective values. The convergence for both angles may depend on the difference between the angle value from the current iteration and the angle value from the last (e.g., previous) iteration being under a threshold value (e.g., $\theta_n^{(i)} < 0.05°$) or a threshold percentage (e.g., 1%). In some cases, the difference between the sin of the angle from the current iteration and the sin of the angle from the last iteration (e.g., $\left|\sin\theta_n^i - \sin\theta_n^{i-1}\right| < 0.001$) is considered for satisfying the convergence criteria. Likewise, the iterative loop can be discontinued if a maximum number of iterations (e.g., $i > i_{max}$) have been performed.

If any of the conditions have been met, the iterative loop is discontinued and the flowchart 400 continues to step 412. At step 412, the values of the angles $\theta_1^{(i)}$ and $\theta_2^{(i)}$ are output. These angles may provide object detection and tracking functions accurate AOA information related to the respective objects related to each angle. The iterative process may compute and output the angles $\theta_1^{(i)}$ and $\theta_2^{(i)}$ in a timely manner that is preferred for automotive applications, enabling various driving systems of a vehicle to operate safely and reliably.

EXAMPLE METHODS

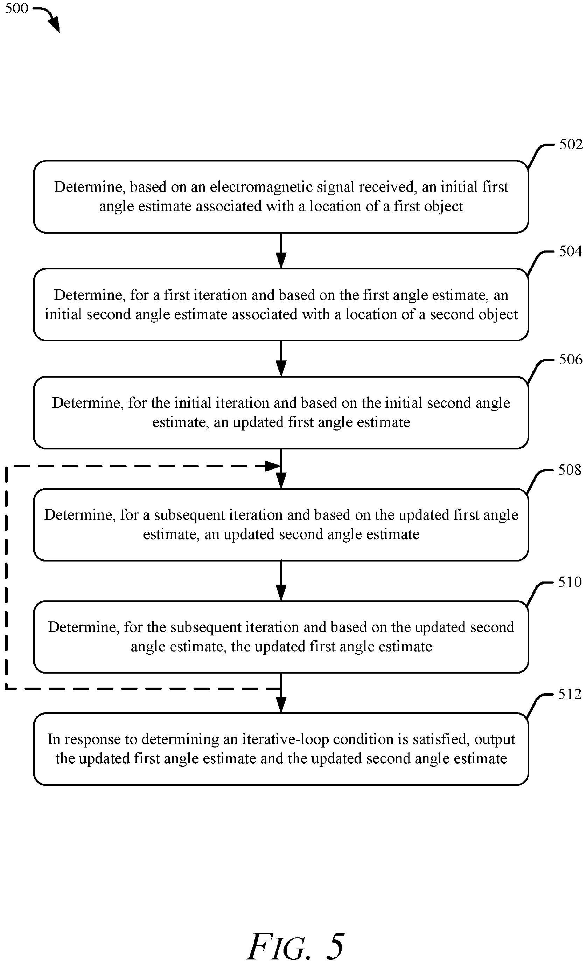

FIG. 5 illustrates an example method 500 for super-resolution based on iterative multiple-source angle-of-arrival estimation, in accordance with techniques of this disclosure. Method 500 is shown as sets of operations (or acts) performed, but not necessarily limited to the order or combinations in which the operations are shown herein. Further, any of one or more of the operations may be repeated, combined, or reorganized to provide other methods.

At step 502, an initial first angle estimate associated with a location of a first object is determined. The initial first angle estimate may be derived from a received electromagnetic signal. The electromagnetic signal may be in the form of a beam vector (e.g., received by a MIMO radar system). In some aspects, an FFT can be applied to find a peak representing one or more objects. In many cases, the initial first angle estimate associated with the peak may be approximate to the actual angle of the strongest source (e.g., the first object) described by the beam vector.

At step 504, an initial second angle estimate associated with a location of a second object is determined during an initial iteration. The initial second angle estimate is based on the initial first angle estimate. In some aspects, the initial second angle estimate is calculated by substituting the initial first angle estimate into eq. 8 or eq. 15 (depending on the MIMO radar system). For example, eq. 8 may be used for a MIMO radar system with ULA(s) only, and eq. 15 may be used for a MIMO radar system having non-ULA(s).

At step 506, an updated first angle estimate is determined for the initial iteration. The updated first angle estimate is based on the initial second angle estimate and can be calculated using the reciprocal of the equation that was used in step 504.

At step 508, an updated second angle estimate is determined for a subsequent iteration. The updated second angle estimate is based on the updated first angle estimate and is calculated using the same equation as that used in step 504.

At step 510, the updated first angle estimate is determined for a subsequent iteration. The updated first angle estimate is based on the updated second angle estimate and is calculated using the same equation as that used in step 504. Once step 510 is performed, conditions to continue an iterative loop (e.g., steps 508 and 510) are evaluated. The conditions to discontinue the loop may include determining if the updated first angle estimate and the updated second angle estimate have converged to their respective values, or if a maximum number of iterations have been performed. If at least one of these conditions have not been satisfied, the iterative loop may continue for additional iterations until the conditions have been satisfied.

At step 512, in response to an iterative-loop condition being satisfied, the updated first angle estimate and the updated second angle estimate are output to an object tracking system. The updated first angle estimate and the updated second angle estimate can be used by the object tracking system to detect and track objects in an environment. This super-resolution method may be ideal for automotive applications and other applications that require fast and accurate processing of electromagnetic signals for safety and reliability.

ADDITIONAL EXAMPLES

Some additional examples for super-resolution based on iterative multiple-source angle-of-arrival estimation are provided below.

Example 1: A method comprising: determining, based on an electromagnetic signal received by an electromagnetic sensor, an initial first angle estimate associated with a location of a first object relative to the electromagnetic sensor; determining, for an initial iteration and based on the initial first angle estimate, an initial second angle estimate associated with a location of a second object relative to the electromagnetic sensor; determining, for the initial iteration and based on the initial second angle estimate, an updated first angle estimate; determining, for a subsequent iteration and based on the updated first angle estimate, an updated second angle estimate; determining, for the subsequent iteration and based on the updated second angle estimate, the updated first angle estimate; and in response to determining an iterative-loop condition is satisfied, outputting, to an object tracking system, the updated first angle estimate and the updated second angle estimate for tracking the first object and the second object, respectively.

Example 2: The method of example 1, the method further comprising: in response to determining the iterative-loop condition is not satisfied: determining, for an additional iteration and based on the updated first angle estimate, the updated second angle estimate; and determining, for the additional iteration and based on the updated second angle estimate, the updated first angle estimate.

Example 3: The method of any one of the preceding examples, wherein the iterative-loop condition comprises a convergence of the updated first angle estimate and the updated second angle estimate.

Example 4: The method of any one of the preceding examples, wherein the convergence of the updated first angle estimate and the updated second angle estimate comprises: the difference between the updated first angle estimate of a current iteration and the updated first angle estimate of a previous iteration is under a threshold value or a threshold percentage; and the difference between the updated second angle estimate of a current iteration and the updated second angle estimate of a previous iteration is under the threshold value or the threshold percentage.

Example 5: The method of any one of the preceding examples, wherein the iterative-loop condition comprises a minimum number of the subsequent iterations.

Example 6: The method of any one of the preceding examples, wherein: determining the initial first angle estimate comprises calculating a fast Fourier transform on the electromagnetic signal; and determining, based on the fast Fourier transform, a peak of the electromagnetic signal, the maximum value corresponding to the initial first angle estimate.

Example 7: The method of any one of the preceding examples, wherein: the electromagnetic signal comprises a beam vector; and the beam vector includes information related to the first object and the second object.

Example 8: The method of any one of the preceding examples, wherein the electromagnetic sensor comprises a multiple-input multiple-output (MIMO) radar sensor including at least one sparse array of antenna channels.

Example 9: The method of any one of the preceding examples, wherein determining the initial second angle estimate, the updated first angle estimate, and the updated second angle estimate is based on reducing phase ambiguity caused by the at least one sparse array of antenna channels.

Example 10: The method of any one of the preceding examples, wherein the at least one sparse array is a uniform linear array and the antenna channels of the uniform linear array are each separated by a same distance that is equal to or greater than a wavelength of an operable frequency of the electromagnetic signal.

Example 11: The method of any one of the preceding examples, wherein the at least one sparse array is a non-uniform linear array including at least a first pair of the antenna channels of the non-uniform linear array being separated by a first distance and at least a second pair of the antenna channels of the non-uniform linear array being separated by a second distance that is different than the first distance.

Example 12: The method of any one of the preceding examples, wherein a beam vector of the non-uniform linear array is normalized to approximate a beam vector of a uniform linear array.

Example 13: The method of any one of the preceding examples, wherein determining the initial second angle estimate, the updated first angle estimate, and the updated second angle estimate includes approximating noise in the electromagnetic signal to be Gaussian random noise having a zero mean.

Example 14: The method of any one of the preceding examples, wherein determining the initial second angle estimate, the updated first angle estimate, and the updated second angle estimate comprises determining an expected value of the initial second angle estimate, an expected value of the updated first angle estimate, and an expected value of the updated second angle estimate.

Example 15: A system comprising: at least one processor configured to: determine, based on an electromagnetic signal received by an electromagnetic sensor, an initial first angle estimate associated with a location of a first object relative to the electromagnetic sensor; determine, for an initial iteration and based on the initial first angle estimate, an initial second angle estimate associated with a location of a second object relative to the electromagnetic sensor; determine, for the initial iteration and based on the initial second angle estimate, an updated first angle estimate; determine, for a subsequent iteration and based on the updated first angle estimate, an updated second angle estimate; determine, for the subsequent iteration and based on the updated second angle estimate, the updated first angle estimate; in response to determining an iterative-loop condition is satisfied, output, to an object tracking system, the updated first angle estimate and the updated second angle estimate for tracking the first object and the second object, respectively; and in response to determining the iterative-loop condition is not satisfied: determine, for an additional iteration and based on the updated first angle estimate, the updated second angle estimate; and determine, for the additional iteration and based on the updated second angle estimate, the updated first angle estimate.

Example 16: The system of any one of the preceding examples, wherein the iterative-loop condition comprises: a convergence of the updated first angle estimate and the updated second angle estimate; or a minimum number of the subsequent iterations.

Example 17: The system of any one of the preceding examples, wherein the processor is configured to determine the initial first angle estimate by at least: calculating a fast Fourier transform on the electromagnetic signal; and determining, based on the fast Fourier transform, a peak of the electromagnetic signal corresponding to the initial first angle estimate.

Example 18: The system of any one of the preceding examples, wherein the electromagnetic sensor comprises a multiple-input multiple-output (MIMO) radar sensor including at least one sparse array of antenna channels; and the processor is configured to determine the initial second angle estimate, the updated first angle estimate, and the updated second angle estimate by at least reducing phase ambiguity caused by the at least one sparse array of antenna channels.

Example 19: The system of any one of the preceding examples, wherein the processor is configured to determine the initial second angle estimate, the updated first angle estimate, and the updated second angle estimate by at least approximating noise in the electromagnetic signal to be Gaussian random noise having a zero mean.

Example 20: A computer-readable storage media comprising instructions that, when executed, configure a processor to: determine, based on an electromagnetic signal received by an electromagnetic sensor, an initial first angle estimate associated with a location of a first object relative to the electromagnetic sensor; determine, for an initial iteration and based on the initial first angle estimate, an initial second angle estimate associated with a location of a second object relative to the electromagnetic sensor; determine, for the initial iteration and based on the initial second angle estimate, an updated first angle estimate; determine, for a subsequent iteration and based on the updated first angle estimate, an updated second angle estimate; determine, for the subsequent iteration and based on the updated second angle estimate, the updated first angle estimate; in response to determining an iterative-loop condition is satisfied, output, to an object tracking system, the updated first angle estimate and the updated second angle estimate for tracking the first object and the second object, respectively; and in response to determining the iterative-loop condition is not satisfied: determine, for an additional iteration and based on the updated first angle estimate, the updated second angle estimate; and determine, for the additional iteration and based on the updated second angle estimate, the updated first angle estimate.

CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims. Problems associated with angular resolutions can occur in other systems. Therefore, although described as a way to improve angular resolution in radar systems, the techniques of the foregoing description can be applied to other systems that would benefit from super-resolution methods. Further, these techniques may also be applied to other host systems requiring fast processing of sensor data while maintaining accuracy.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

**Claims**

1. A method comprising:

    determining, based on an electromagnetic signal received by an electromagnetic sensor, an initial first angle estimate associated with a location of a first object relative to the electromagnetic sensor;

    determining, for an initial iteration and based on the initial first angle estimate, an initial second angle estimate associated with a location of a second object relative to the electromagnetic sensor;

    determining, for the initial iteration and based on the initial second angle estimate, an updated first angle estimate;

    determining, for a subsequent iteration and based on the updated first angle estimate, an updated second angle estimate;

    determining, for the subsequent iteration and based on the updated second angle estimate, the updated first angle estimate; and

    in response to determining an iterative-loop condition is satisfied, outputting, to an object tracking system, the updated first angle estimate and the updated second angle estimate for tracking the first object and the second object, respectively.

2. The method of claim 1, the method further comprising:
    in response to determining the iterative-loop condition is not satisfied:

    determining, for an additional iteration and based on the updated first angle estimate, the updated second angle estimate; and

    determining, for the additional iteration and based on the updated second angle estimate, the updated first angle estimate.

3. The method of any one of the preceding claims, wherein the iterative-loop condition comprises a convergence of the updated first angle estimate and the updated second angle estimate.

4. The method of claim 3, wherein the convergence of the updated first angle estimate and the updated second angle estimate comprises:

    a difference between the updated first angle estimate of a current iteration and the updated first angle estimate of a previous iteration is under a threshold value or a threshold percentage; and

    a difference between the updated second angle estimate of a current iteration and the updated second angle estimate of a previous iteration is under the threshold value or the threshold percentage.

5. The method of any one of the preceding claims, wherein the iterative-loop condition comprises a minimum number of the subsequent iterations.

6. The method of any one of the preceding claims, wherein:

    determining the initial first angle estimate comprises calculating a fast Fourier transform on the electromagnetic signal; and

    determining, based on the fast Fourier transform, a peak of the electromagnetic signal, the maximum value corresponding to the initial first angle estimate.

7. The method of any one of the preceding claims, wherein:

    the electromagnetic signal comprises a beam vector; and
    the beam vector includes information related to the first object and the second object.

8. The method of any one of the preceding claims, wherein the electromagnetic sensor comprises a multiple-input multiple-output (MIMO) radar sensor including at least one sparse array of antenna channels.

9. The method of claim 8, wherein determining the initial second angle estimate, the updated first angle estimate, and the updated second angle estimate is based on reducing phase ambiguity caused by the at least one sparse array of antenna channels.

10. The method of claim 9, wherein the at least one sparse array is a uniform linear array and the antenna channels of the uniform linear array are each separated by a same distance that is equal to or greater than a wavelength of an operable frequency of the electromagnetic signal.

11. The method of claim 9, wherein the at least one sparse array is a non-uniform linear array including at least a first pair of the antenna channels of the non-uniform linear array being separated by a first distance and at least a second pair of the antenna channels of the non-uniform linear array being separated by a second distance that is different than the first distance.

12. The method of claim 11, wherein a beam vector of the non-uniform linear array is normalized to approximate a beam vector of a uniform linear array.

13. The method of any one of the preceding claims, wherein determining the initial second angle estimate, the updated first angle estimate, and the updated second angle estimate includes approximating noise in the electromagnetic signal to be Gaussian random noise having a zero mean.

14. The method of any one of the preceding claims, wherein determining the initial second angle estimate, the updated first angle estimate, and the updated second angle estimate comprises determining an expected value of the initial second angle estimate, an expected value of the updated first angle estimate, and an expected value of the updated second angle estimate.

15. A system comprising at least one processor configured to perform the method of any one of the preceding claims.

*FIG. 1*

200

102-1

202

214

**Radar System**
**104-1**

**Radar MMIC**
**114-1**

| Transceiver/Receiver 206 | Timing / Control 208 | Analog-to-Digital 210 |

**Radar Processor(s)**
**116-1**

**Computer-Readable Storage Media**
**212**

**Object Detection Module**
**118-1**

**Super-Resolution Submodule**
**218**

216

Detections
122-1

**Output Manager**
**120-1**

**Other Vehicle-Based Systems**
**204**

| Autonomous Control 204-1 | Safety System 204-2 | Localization 204-3 |
| Vehicle-to-Vehicle 204-4 | Occupant Interface 204-5 | Multi-Sensor Tracker 204-6 |

*FIG. 2*

*FIG. 3-1*

Sparse Uniform Linear Array
300-2

302-1      302-2      302-3

$d_{2-1}$
312

$d_{3-2}$
314

$d_{2-1} = d_{3-2}$

*FIG. 3-2*

Sparse Non-Uniform Linear Array
300-3

302-1      302-2      302-3

$d_{2-1}$
316

$d_{3-2}$
318

$d_{2-1} \neq d_{3-2}$

*FIG. 3-3*

400

```
┌─────────────────────────────┐
│  Receive initial θ₁⁽ⁱ⁾, i=0 │
│            402              │
└─────────────────────────────┘
              │
              ▼
┌─────────────────────────────┐
│          i=i+1             │
│            404              │
└─────────────────────────────┘
              │
              ▼
┌─────────────────────────────┐
│  Estimate θ₂⁽ⁱ⁾ with θ₁⁽ⁱ⁻¹⁾ │
│            406              │
└─────────────────────────────┘
              │
              ▼
┌─────────────────────────────┐
│  Estimate θ₁⁽ⁱ⁾ with θ₂⁽ⁱ⁾   │
│            408              │
└─────────────────────────────┘
              │
              ▼
         Is (i ≥ 2 and do θ₁⁽ⁱ⁾ and θ₂⁽ⁱ⁾ converge)
              or i > i_max              No
              410
              │ Yes
              ▼
┌─────────────────────────────┐
│  Output  θ₁⁽ⁱ⁾ and θ₂⁽ⁱ⁾     │
│            412              │
└─────────────────────────────┘
```

Receive initial $\theta_1^{(i)}$, i=0
$\underline{402}$

i=i+1
$\underline{404}$

Estimate $\theta_2^{(i)}$ with $\theta_1^{(i-1)}$
$\underline{406}$

Estimate $\theta_1^{(i)}$ with $\theta_2^{(i)}$
$\underline{408}$

Is (i ≥ 2 and do $\theta_1^{(i)}$ and $\theta_2^{(i)}$ converge) or $i > i_{max}$
$\underline{410}$

No

Yes

Output $\theta_1^{(i)}$ and $\theta_2^{(i)}$
$\underline{412}$

*FIG. 4*

500

502

Determine, based on an electromagnetic signal received, an initial first angle estimate associated with a location of a first object

504

Determine, for a first iteration and based on the first angle estimate, an initial second angle estimate associated with a location of a second object

506

Determine, for the initial iteration and based on the initial second angle estimate, an updated first angle estimate

508

Determine, for a subsequent iteration and based on the updated first angle estimate, an updated second angle estimate

510

Determine, for the subsequent iteration and based on the updated second angle estimate, the updated first angle estimate

512

In response to determining an iterative-loop condition is satisfied, output the updated first angle estimate and the updated second angle estimate

*FIG. 5*

# EUROPEAN SEARCH REPORT

Europäisches Patentamt
European Patent Office
Office européen des brevets

**Application Number**

EP 23 16 4982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DING JIERU ET AL: "TDM-MIMO Automotive Radar Point-Cloud Detection Based on the 2-D Hybrid Sparse Antenna Array", IEEE TRANSACTIONS ON GEOSCIENCE AND REMOTE SENSING, IEEE, USA, vol. 60, 12 April 2022 (2022-04-12), pages 1-15, XP011906856, ISSN: 0196-2892, DOI: 10.1109/TGRS.2022.3166770 [retrieved on 2022-04-12] * the whole document * | 1-15 | INV. G01S7/03 G01S7/35 G01S13/44 G01S13/58 G01S13/72 ADD. G01S13/931 |
| X | SUN SHUNQIAO ET AL: "MIMO Radar for Advanced Driver-Assistance Systems and Autonomous Driving: Advantages and Challenges", IEEE SIGNAL PROCESSING MAGAZINE, IEEE, USA, vol. 37, no. 4, 29 June 2020 (2020-06-29), pages 98-117, XP011796877, ISSN: 1053-5888, DOI: 10.1109/MSP.2020.2978507 [retrieved on 2020-06-27] * the whole document * | 1-15 | |
| X | WILLIAM ROBERTS ET AL: "MIMO radar angle-range-Doppler imaging", RADAR CONFERENCE, 2009 IEEE, IEEE, PISCATAWAY, NJ, USA, 4 May 2009 (2009-05-04), pages 1-6, XP031461463, ISBN: 978-1-4244-2870-0 * the whole document * | 1-15 | |
| | -/-- | | |

**TECHNICAL FIELDS SEARCHED (IPC)**

G01S

The present search report has been drawn up for all claims

| Place of search | Date of completion of the search | Examiner |
|---|---|---|
| Munich | 4 October 2023 | Schmelz, Christian |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

Europäisches
Patentamt

European
Patent Office

Office européen
des brevets

**EUROPEAN SEARCH REPORT**

Application Number

**EP 23 16 4982**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU AIHUA ET AL: "DOA estimation with extended sparse and parametric approach in multi-carrier MIMO HFSWR", THE JOURNAL OF ENGINEERING, THE INSTITUTION OF ENGINEERING AND TECHNOLOGY, MICHAEL FARADAY HOUSE, SIX HILLS WAY, STEVENAGE, HERTS. SG1 2AY, UK, vol. 2019, no. 21, 1 November 2019 (2019-11-01), pages 7810-7814, XP006086796, DOI: 10.1049/JOE.2019.0755 * page 7811 * ----- | 13 | |

TECHNICAL FIELDS
SEARCHED      (IPC)

The present search report has been drawn up for all claims

| Place of search | Date of completion of the search | Examiner |
|---|---|---|
| Munich | 4 October 2023 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)